# EUROPÄISCHE PATENTSCHRIFT

(11) **EP 1 554 660 B1**
(45) Veröffentlichungstag und Bekanntmachung des Hinweises auf die Patenterteilung: **28.04.2010**
(21) Anmeldenummer: 03788940.9
(22) Anmeldetag: 07.10.2003
(51) Int. Cl.: G06F 15/167

(54) **VERFAHREN UND VORRICHTUNG ZUM SENDEN VON NACHRICHTEN ÜBER EIN DATENNETZWERK**
METHOD AND DEVICE FOR TRANSMITTING MESSAGES OVER A DATA NETWORK
PROCEDE ET DISPOSITIF DE TRANSMISSION DE MESSAGES PAR UN RESEAU DE DONNEES

(30) Priorität: 07.10.2002 DE 10246732
(43) Veröffentlichungstag der Anmeldung: 20.07.2005
(73) Patentinhaber: OCÉ Printing Systems GmbH, 85586 Poing (DE)
(72) Erfinder: UMLAUF, Jens, 86415 Mering (DE); FERTL, Christian, 83539 Pfaffing (DE); WALLIS, Christian, 80687 München (DE); KATTERLOHER, Rainer, 84405 Dorfen (DE); ANDRESEN, Hermann, 84431 Heldenstein (DE); PILSL, Stephan, 85244 Röhrmoos (DE)
(74) Vertreter: Schaumburg, Thoenes, Thurn, Landskron, Eckert
(86) Internationale Anmeldenummer: PCT/EP2003/011087
(87) Internationale Veröffentlichungsnummer: WO 2004/034272

(56) Entgegenhaltungen:
- EP-A- 1 193 209
- DE-A- 4 226 052
- DE-A- 19 928 930
- US-A- 5 602 992
- US-A- 6 131 809
- US-A1- 2002 059 374
- US-B1- 6 347 084
- US-B1- 6 434 656

## Beschreibung

Lokale Datennetzwerke mit mehreren Mikrokontrollern werden oftmal.s in Maschinen, wie zum Beispiel Druckern oder Kopiervorrichtungen, vorgesehen, bei welchen die einzelnen Module der Maschinen jeweils von einem oder mehreren Mikrokontrollern gesteuert werden und die Mikrokontroller alle Module über ein solches Datennetzwerk kommunizieren. Diese Datennetzwerke beruhen oftmals auf dem CAN-Bus. Der CAN-Bus bzw. das entsprechende Protokoll ist in CAN Controller Error Network, Grundlage und Praxis, 2. Auflage, 1997, (ISBN 3-7785-2575-1) ausführlich erläutert. Ein CAN-Bus ist ein serieller Datenbus, der üblicherweise mit einer differentiellen Zwei-Draht-Leitung realisiert wird. Die Nachrichten werden in sogenannten CAN-Telegrammen bzw. CAN-Frames übertragen. Ein solches CAN-Datentelegramm umfasst ein Startbit, einen 11 Bit umfassenden Indentifyer, weitere sieben Steuerbits, 0 - 8 Datenbytes und weitere Steuerbits, die auf die Datenbytes folgen. Der Aufbau eines CAN-Datentelegrammes kann sich je nach Spezifikation unterscheiden; so gibt es eine CAN-Spezifikation 2.0A und eine CAN-Spezifikation 2.0B Die Arbitrierung wird bitweise und steuerungsfrei ausgeführt. Das bedeutet, das der Sender, der sich im Datenbus gegenüber anderen Sendern aufgrund seiner Priorität durchsetzt, sein Telegramm nicht erneut senden muss. Zum Arbitrieren werden die von den Datenbytes vorgesehenen Steuerbits verwendet, wobei die Arbitrierung im wesentlichen durch die Bits der Identifyer erfolgt.

Eine Weiterentwicklung- des CAN-Busses, wird als PeliCAN bezeichnet, die gegenüber den herkömmlichen CAN-Bus mit weiteren Dienstmerkmalen ausgestattet ist. Von der Firma Philips wird ein stand-alone CAN-Controller mit der Bezeichnung SJA 1000 angeboten, der das CAN 2.08-Protokoll vollständig unterstützt und zusätzlich im PeliCAN-Modus betrieben werden kann. Dieser Controller ist im Datasheet vom 4. Januar 2000 ausführlich beschrieben.

Aus der US-A-4,737,907 geht eine von mehreren Prozessoren gesteuerte Maschine hervor, wobei einer der Prozessoren ein Master-Prozessor ist und die weiteren Prozessoren vom Master-Prozessor angesteuert werden, um bestimmte Aktionen auszuüben. Mittels einer Lochscheibe werden Taktsignale erzeugt, die allen Prozessoren zugeführt werden. Der Master-Prozessor kann deshalb an einen weiteren Prozessor einen Befehl schicken und diesen Befehl mit einer Verzögerungszeit kombinieren, so dass dieser weitere Mikrokontroller den Befehl erst nach Ablauf der Verzögerungszeit ausführt. Die Verzögerungszeit wird in einer bestimmten Anzahl von Takten angegeben Durch die Verwendung der Takte muss der Master-Prozessor seine jeweiligen Befehle zur Ausführung der Aktionen nicht immer zu dem Zeitpunkt an die weiteren Mikrokontroller abgeben, zu welchen die Befehle ausgeführt werden sollen, sondern kann die jeweiligen Befehle frühzeitig absenden und sich nach dem Absenden der Befehle um andere Aktionen kümmern. Hierdurch wird der Master-Prozessor entlastet.

Würde die Kommunikation zwischen dem Master-Prozessor und den weiteren Prozessoren über ein Datennetzwerk ausgeführt werden, bei welchem die Laufzeiten zum Übertragen von Nachrichten variieren können und insbesondere von der Beanspruchung des Datennetzwerkes abhängen, können die einzelnen Aktionen nicht zu einem exakt vorbestimmten Zeitpunkt ausgeführt werden, da dieser Zeitpunkt von der Übertragungszeit der einzelnen Nachrichten beeinträchtigt werden würde.

In der US-A-3,614,745 ist eine Hardware-Schaltung gezeigt, in der verschiedene Prozessorbausteine miteinander kommunizieren können.

Aus der DE 100 59 270 A1 geht ein lokales Netzwerk zum Steuern mehrerer Prozessoren und Steuerkarten an einer Druckmaschine hervor. Die einzelnen Prozesse an den Steuerkarten werden mit Hilfe eines zentral erzeugten Systemtraktes, der über eine freie Leitung zu den einzelnen Steuerkarten übertragen wird, synchronisiert. Die einzelnen Aktionen werden von den Steuerkarten in Abhängigkeit von einer Winkelstellung der Maschine ausgelöst, wobei den Steuerkarten eine bestimmte Winkelstellung, die Drehgeschwindigkeit und die Beschleunigung zu einem bestimmten Zeitpunkt übermittelt wird, woraus dann andere Winkelstellungen extrapoliert werden.

Aus der US 5,313,62.0 geht ein Mehrprozessorsystem hervor, bei welchem mehrere autonome Prozessoren den gleichen Adressbereich eines Speichers benutzen.

Die DE 198 22 146 A1 beschreibt eine Vorrichtung zur Kommunikation zwischen einer Vielzahl von elektrischen Komponenten, wie zum Beispiel Sensoren, Aktuatoren oder Anzeigen. Diese Vorrichtung umfasst einen Master und eine Anzahl von Slaves entsprechend der Anzahl der elektrischen Komponenten, die über eine bidirektionale Schnittstelle miteinander verbunden sind. Der Master erzeugt die Synchronisationsimpulse, Taktsignale und Sendeimpulse, wobei ein Synchronisationsimpuls jeweils ein Zyklus einleitet, in dem eine bestimmte Anzahl von Taktsignalen auf die bidirektionale Schnittstelle geschaltet werden.

Aus der DE 199 20 992 A1 geht ein Verfahren hervor, mit welchem zwei Prozessoren auf eine gemeinsame Speichereinrichtung zugreifen können, die ein Dual-Ported RAM ist, wobei keine Arbitrierungslogik notwendig ist. Hierzu wird eine im Dual-Ported RAM gespeicherte Information n-mal ausgelesen und anschließend verglichen. Sind die n ermittelten Informationen identisch, so ist die ausgelesene Information korrekt. Ansonsten muss der Lesevorgang wiederholt werden.

Aus der DE 199 28 930 A1 geht eine Routing-Vorrichtung zur Kopplung verschiedener Telekommunikationsnetzwerke mit unterschiedlichen Protokollen und unterschiedlichen Übertragungseigenschaften hervor. Insbesondere sollen mit dieser Vorrichtung schmalbandige militärische Sondernetze an breitbandige zivile Netze und/oder andere schmalbandige militärische Sondernetze gekoppelt werden. Router erlauben Netze mit unterschiedlichen Netzprotokollen zu verbinden. Router ermitteln anhand der Adresse eines Datenpaketes, welcher Router oder welche Workstation das Paket als nächstes erhalten soll. Basierend auf einer Routing-Tabelle stellen Router sicher, dass die Pakete auf möglichst effizientem Weg ihr Ziel erreichen. Wenn eine Verbindung zwischen zwei Routern gestört ist, kann der sendende Router einen alternativen Weg ermitteln, um den Verkehrsfluss aufrecht zu erhalten.

Aus der EP 1 193 209 A1 ist ein Kommunikationssystem für Steuerungs-Baugruppen eines Aufzugs bekannt, die jeweils Netzwerke mit verschiedenen Kommunikationsprotokollen aufweisen. Zur Verbindung der Netzwerke ist ein Protokoll-Konverter vorgesehen, der ein Dual-Ported RAM umfasst, über den ein Datentransfer erfolgt.

Der Erfindung liegt die Aufgabe zugrunde, ein Verfahrenzur Steuerung einer Vorrichtung zu schaffen, bei dem Nachrichten in einem lokalen, mehrere Mikrokontroller aufweisenden Datennetzwerk zwischen Steuereinrichtungen der Vorrichtung versandt werden, wobei das Datennetzwerk aus Netzwerkabschnitten zusammengesetzt ist, die auf unterschiedlichen Übertragungsprotokollen beruhen und wobei Echtzeitanwendungen an den Steuereinrichtungen ausgeführt werden können.

Diese Aufgabe wird mit den Merkmalen des Anspruchs 1 gelöst.

Vorteilhafte Ausgestaltungen der Erfindung sind in den abhängigen Ansprüchen enthalten.

Beim erfindungsgemäßen Verfahren ist an jedem Mikrokontroller eine Kommunikationstask vorgesehen, die auf eine Routing-Tabelle zugreift, in der in Abhängigkeit von dem Mikrokontroller, an dem eine Nachricht übermittelt werden soll, angegeben ist, zu welchem benachbarten Mikrokontroller sie weiterzuleiten ist, so dass dieser benachbarte Mikrokontroller wiederum mit einer entsprechenden Kommunikationstask die Nachricht mittels einer entsprechenden Routing-Tabelle an einen weiteren benachbarten Mikrokontroller weiterleiten kann, bis sie den endgültigen Empfänger erreicht.

Da erfindungsgemäß zumindest zwischen zwei der Mikrokontroller des Datennetzwerkes als Kommunikationssystem ein Dual-Ported RAM angeordnet ist, können zwischen diesen beiden Mikrokontrollern zum einen größere Mengen Daten sehr schnell ausgetauscht werden und zum anderen im Austausch der Daten diese zwischengepuffert werden, so dass auch ein zeitverzögertes Lesen der Daten möglich ist.

Die erfindungsgemäße Kombination bestehend aus dem Dual-Ported RAM und dem Vorsehen von Kommunikationstasks, die Nachrichten mittels einer Routing-Tabelle übertragen, schafft ein einfaches, flexibles und dennoch schnelles Da tennetzwerk, das besonders zum Steuern von Vorrichtungen wie zum Beispiel Drucker, geeignet ist.

Weiterhin werden über eine parallel zum Datennetzwerk ausgebildete Taktleitung Taktsignale an alle mit dem Datennetzwerk verbundene Mikrokontroller übermittelt, wobei die Mikrokontroller jeweils Zähler aufweisen, mit welchen sie die Taktrate zählen und die Zähler synchronisiert werden, so dass in allen Zählern der Mikrokontroller jeweils die gleichen Taktwerte gezählt werden. Diese Zähler stellen somit exakt synchronisiert Uhren dar und Steuerungsbefehle werden mit einer Ausführungszeit in Form eines Zählerwertes versehen, so dass sie zu einer exakt bestimmten Zeit ausgeführt werden.

Hierdurch wird die Ausführung bestimmter Aktionen zu bestimmten Zeitpunkten ausgeführt und es ist somit unabhängig von der Laufzeit, die die Befehle über das Datennetzwerk benötigen.

Die Erfindung ist insbesondere zur Anwendung in einem Druck- oder Kopiergerät vorgesehen.

Die Erfindung wird nachfolgend beispielhaft anhand der Zeichnungen näher erläutert. In den Zeichnungen zeigen schematisch:
- Fig. 1: einen Einzelblattdrucker mit einer Steuerein- richtung, bei dem das erfindungsgemäße Verfahren angewendet wird,
- Fig. 2: ein Steuermodul in einem Blockschaltbild,
- Fig. 3: schematisch die Funktionsweise eines im Steuer- modul aus Figur 2 enthaltenen Dual-Ported RAM,
- Fig. 4: eine Steuereinrichtung mit mehreren Mikrokon- trollermodulen,
- Fig. 5: einen Ausschnitt der Steuereinrichtung aus Figur 4 mit zwei Steuermodulen gemäß Figur 2,
- Fig. 6: eine Tabelle, in der die ID-Nummern einzelner Mikrokontroller einer Steuereinrichtung für ei- nen Drucker eingegeben sind,
- Fig. 7: eine Routing-Tabelle.

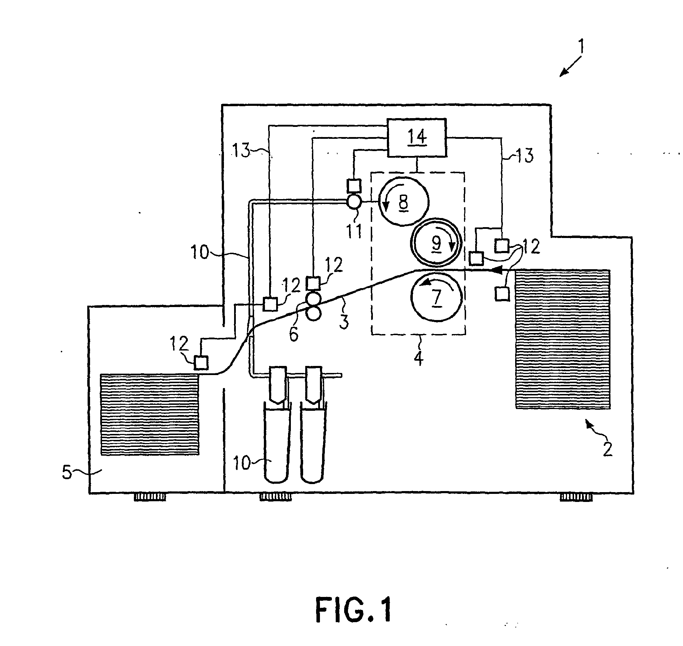

Das erfindungsgemäße Verfahren zum Senden von Nachrichten über ein solches Datennetzwerk werden in einer Steuereinrichtung eines Einzelblattdruckers 1 eingesetzt (Fig. 1).

Der Einzelblattdrucker 1 weist einen Papiereingabeschacht 2 und eine Einrichtung (nicht dargestellt) zum Vereinzeln der darin gestapelten Papierbögen auf. Die Papierbögen werden entlang eines Transportweges 3 vom Papiereingabeschacht 2 zu einem Druckwerk 4 und einem Ausgabeschacht 5 befördert.

Der Transportweg ist durch eine Vielzahl Walzenpaare 6 (in Figur 1 ist lediglich zur Vereinfachung der Darstellung ein einzelnes. Paar gezeigt) und korrespondierende Fuhrungseinrichtungen ausgebildet. Das Druckwerk 4 weist zwei Druckwalzen 7 und eine Farbauftragswalze 8 auf. Bei elektrografisch arbeitenden Druckwerken 4 wird die Farbauftragswalze 8 mittels einer Belichtungseinheit (nicht dargestellt) belichtet, so dass sie an den belichteten/nichtbelichteten Stellen Farbpartikel aufnimmt. Die Farbpartikel werden von einem entsprechenden Vorratsbehälter 9 über eine Zuführleitung 10 und ein ansteuerbares Ventil 11 der Farbauftragswalze 8 zugeführt.

Der Drucker 1 weist eine Steuereinrichtung auf, die aus mehreren Steuermodulen 12 zum Ansteuern des Papiereingabeschachts 2, des Transportweges 3, des Druckwerkes 4, des Ausgabeschachtes 5, usw. ausgebildet sind. Diese Steuermodule 12 sind über ein Datennetzwerk 13 miteinander und mit einer zentralen Steuereinrichtung 14 verbunden.

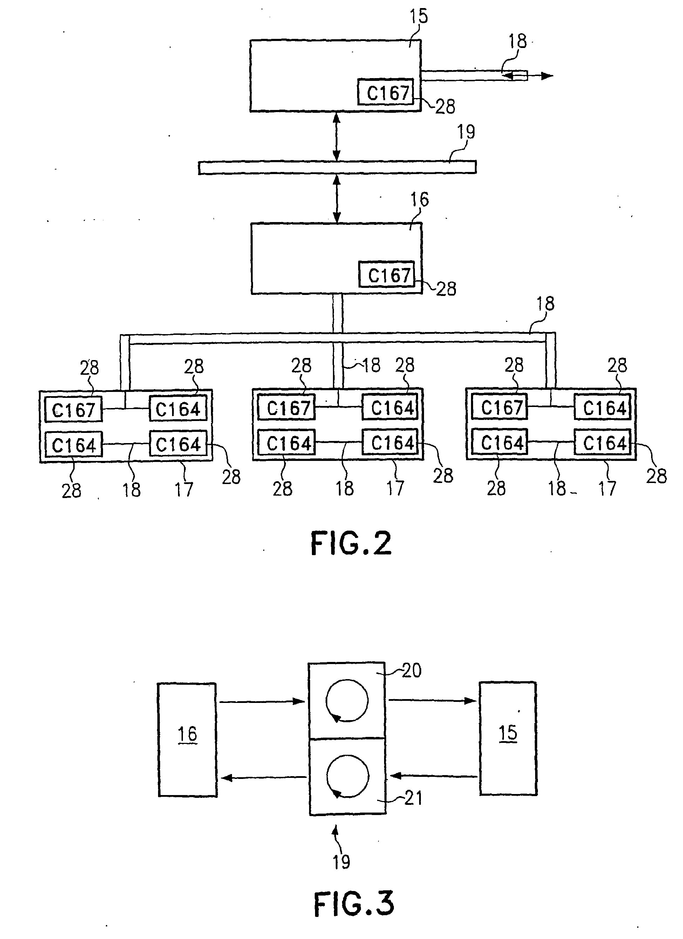

Ein typisches Steuermodul 12 ist in Figur 2 schematisch dargestellt. Es weist fünf Mikrokontroller-bzw. Prozessorbaugruppen, nämlich eine Verwaltungsbaugruppe 15, eine Echtzeitbaugruppe 16 und drei Steuerbaugruppen 17 auf. Die Steuerbaugruppen 17 besitzen jeweils vier Mikrokontroller bzw. Prozessoren 28, die innerhalb der Baugruppe 17 über einen CAN-Datenbus 18 miteinander verbunden sind. Einer der vier Mikrokontroller 28 der Steuerbaugruppen 17 bildet einen Bootmaster und die drei weiteren Mikrokontroller 28, die Satelliten, sind beim Boot-Vorgang dem Bootmaster untergeordnet. Der Bootmaster ist typischerweise ein C167-Mikrokontroller von Infinion. Die weiteren Mikrokontroller sind typischerweise C164-Mikrokontroller von Infinion. Die Steuerbaugruppen 17 sind untereinander und mit der Echtzeitbaugruppe 16 über den CAN-Bus 18 verbunden. Die Echtzeitbaugruppe 16 weist einen einzigen Mikrokontroller 28 auf, der typischerweise ein C167-Mikrokontroller von der Firma Infinion ist.

Die Echtzeitbaugruppe 16 ist mit der Verwaltungsbaugruppe 15 über einen Dual-Ported RAM 19 verbunden. Der Dual-Ported RAM ist ein Speicherbaustein, der sowohl von der Echtzeitbaugruppe 16 als auch von der Verwaltungsbaugruppe 15 gelesen und beschrieben werden kann. Hierdurch können diese beiden Baugruppen 15, 16 Daten austauschen, indem sie ihre Daten in dem Dual-Ported RAM 19 ablegen und die von der anderen Baugruppe abgelegten Daten auslesen. Ein solch ein Dual-Ported RAM 19 erlaubt zum einen einen sehr schnellen Austausch größerer Mengen von Daten und zum anderen werden beim Austausch der Daten diese zwischengepuffert, so dass auch ein zeitverzögertes Lesen der Daten möglich ist, ohne dass hierdurch Daten verloren gehen. Der Dual-Ported RAM 19 ist in zwei gleich große Speicherbereiche 20, 21 unterteilt (Figur 3). Diese Speicherbereiche 20, 21 werden jeweils als Ringpuffer zur Kommunikation von der Echtzeitbaugruppe 16 zur Verwaltungsbaugruppe 15 bzw. zur Kommunikation von der Verwaltungsbaugruppe 15 zur Echtzeitbaugruppe 16 verwendet. Ein solcher Ringspeicherpuffer ist in Datenblöcke à 266 Byte unterteilt, wobei 10 Byte einen Header zur Verwaltung der Datenblöcke und 256 Byte als Datenbyte verwendet werden. Jeder Ringspeicherpuffer umfasst 2000 derartige Datenblöcke, die nach dem FIFO-Prinzip beschrieben und gelesen werden.

Die Verwaltungsbaugruppe 15 besitzt einen Anschluss zum CAN-Bus 18, über den mehrere Steuermodule 12 mit weiteren Steuermodulen oder einem weiteren Datennetzwerk auf der Basis des CAN-Busses verbunden werden können.

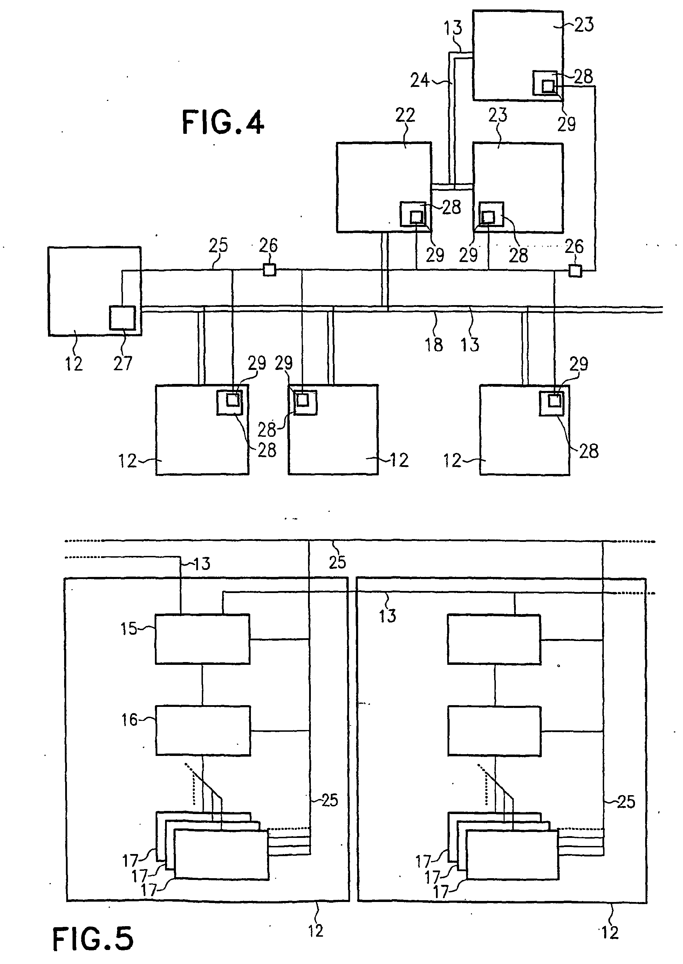

Figur 4 zeigt schematisch den Aufbau einer Ausführungsform einer erfindungsgemäßen Steuereinrichtung für einen Drucker. Diese Steuereinrichtung ist modular aus mehreren Mikrokontrollermodulen ausgebildet, die über ein oder mehrere Datennetzwerke miteinander verbunden sind. Bei der Ausführungsform nach Figur 4 sind vier Mikrokontrollermodule vorgesehen, die gemäß dem in Figur 2 dargestellten Steuermodul 12 ausgebildet sind. Diese Steuermodule 12 sind über den CAN-Datenbus 18 zum Austausch von Nachrichten miteinander verbunden. An diesem CAN-Datenbus 18 ist ein weiteres Mikrokontrollermodul 22 angeschlossen, das einen anderen Aufbau besitzt, als die übrigen Steuermodule 12. An das Mikrokontrollermodul 22 sind weitere Mikrokontrollermodule 23 über einen Datenbus 24 angeschlossen. Der Datenbus 24 kann ein CAN-Datenbus sein. Es ist jedoch möglich, einen anderen Datenbustyp zu verwenden.

Zusätzlich zum Datennetzwerk ist eine Taktleitung 25 vorgesehen, die zu allen Mikrokontrollerbaugruppen 12, 22, 23 geführt wird und dort zu jedem einzelnen Mikrokontroller bzw. Prozessor verzweigt wird (Figur 5). In vorbestimmten Abständen sind in der Taktleitung Verstärker 26 angeordnet, die das in der Taktleitung anliegende Signal verstärken.

Eines der Steuermodule 12 stellt den Taktmaster dar, d.h. dessen Taktgeber 27 wird dazu verwendet, auf die Taktleitung 25 ein Taktsignal einzuspeisen. Bei der in Fig. 4 gezeigten Steuereinrichtung ist der Taktmaster das am linken Ende des Datennetzwerks angeordnete Steuermodul 12. Jeder Mikrokontroller besitzt einen Zähler mit einem Zähl-Register. Beim Hochfahren der Steuereinrichtung wird zunächst über das Datennetzwerk 13 die Kommunikation zwischen allen Mikrokontrollermodulen 12, 22 und 23 und zwischen all deren Mikrokontrollern bzw. Prozessoren hergestellt. Danach werden die Zähl-Register aller Mikrokontroller initialisiert, d.h. auf 0 gesetzt, der in der Regel Null ist. Dann melden alle Mikrokontroller an den Taktmasten, dass deren Zähler initialisiert sind. Bei den Steuermodulen 12 wird diese Meldung von der Verwaltungsbaugruppe 15 ausgeführt. Erst danach beginnt der Taktmaster das Taktsignal in die Taktleitung 25 einzuspeisen. Alle Mikrokontroller zählen mit ihrem jeweiligen mit der Taktleitung verbundenen Zähler die Anzahl der von der Taktleitung 25 empfangenen Takte. Da alle Zähler gleichzeitig mit dem gleichen Zählwert zum Zählen begonnen haben, sind sie exakt synchronisiert und enthalten ein exakt synchronisiertes Zeitsignal. Es ist zweckmäßig, die Zähler in regelmäßigen Abständen erneut zu synchronisieren, damit Probleme durch den Überlauf der Zähler o.dgl. vermieden werden. Hierzu wird das Taktsignal ausgeschaltet, alle Zähler werden auf einen vorbestimmten Wert, vorzugsweise auf 0, gestellt und sobald alle Zähler auf dem gleichen Wert eingestellt sind, wird das Taktsignal erneut in die Taktleitung eingespeist. Eine typische Taktrate für ein solches Taktsignal ist zum Beispiel 100 kHz. Die Zähler sind üblicherweise 32-bit-Zähler. Grundsätzlich ist es auch möglich, 16-bit-Zähler oder Zähler mit einem größere Register zu verwenden.

Durch die Verwendung des Taktsignales ist es möglich Echtzeitanwendungen an einer Steuereinrichtung auszuführen, deren Mikrokontroller bzw. Steuermodule mit einem einfachen, kostengünstigen Datenbus, wie zum Beispiel dem CAN-Datenbus, verbunden sind, auf welchem keine exakte Übertragungszeit der einzelnen Nachrichten sichergestellt werden kann. Der CAN-Datenbus ist ein einfacher, serieller Datenbus mit differentieller Zwei-Draht-Leitung.

Bei der erfindungsgemäßen Steuereinrichtung werden von der zentralen Steuereinrichtung 14, die durch eines der Mikrokontrollermodule im Datennetzwerk 13 dargestellt wird, Steuerungsbefehle erzeugt und über das Datennetzwerk 13 an den entsprechenden Mikrokontroller übertragen. Diese Nachrichten bzw. Steuerungsbefehle können mit einer Zeitangabe in Form eines Zählerstandes versehen werden. Der entsprechende Mikrokontroller speichert diese Zeitangabe in einem Vergleichs-Register. Sobald der Zählerstand im Zähl-Register eintritt wird an diesem Mikrokontroller der entsprechende Befehl ausgeführt.

Bei der Steuerung des Transportes von Papierbögen ist es zum Beispiel notwendig, dass mehre Walzenpaare zu exakt vorbestimmten Zeitpunkten angesteuert und deren Drehgeschwindigkeit synchron gesteigert wird. Für einen jeden Motor zum Antreiben eines Walzenpaares ist jeweils ein Mikrokontroller vorgesehen. Die einzelnen Walzenpaare können somit individuell, aber zeitlich exakt synchronisiert angesteuert werden.

Der synchrone Zählerstand der einzelnen Zähler kann auch als Zeitsignal für bestimmte zeitlich kritische Informationen verwendet werden. Derartige Informationen sind zum Beispiel Sensordaten, die von an einen Mikrokontroller bzw. Mikrokontroller gekoppelten Sensor erzeugt werden, Fehlermeldungen, die vom jeweiligen Mikrokontroller erzeugt werden, oder Tracedaten, die den Status der einzelnen Elemente der Druckvorrichtung beschreiben. Diese entsprechenden Informationen, wie Sensordaten, Fehlermeldungen oder Trace-Einträge werden zum Zeitpunkt ihrer Entstehung mit dem aktuellen Zeitsignal versehen, das als Zeitstempel bezeichnet wird. Hierdurch ist beim Weiterleiten dieser Nachrichten über das Datennetzwerk 13 für die weiteren Mikrokontrollermodule, insbesondere der zentralen Steuereinrichtung 14, der Entstehungszeitpunkt der Nachricht feststellbar. Somit kann bei der Analyse von Abläufen die zeitliche Abfolge der einzeln Abläufe exakt rekonstruiert werden.

Bei derartigen komplexen Steuerungsaufgaben, wie in einem Drucker, tritt zunehmend das Problem auf, dass es an sich geeignete Teillösungen für bestimmte Teilaufgaben gibt, die auf einem von einem Mikrokontroller gesteuerten System beruhen, das jedoch nicht zu dem vorhandenen Datennetzwerk kompatibel ist und deshalb nur sehr aufwendig integrierbar ist. Zudem ist es oftmals wünschenswert, einzelne Abschnitte eines Datennetzwerkes aus unterschiedlichen Datenbussen oder Datenübertragungssystemen auszubilden, wie zum Beispiel bei dem oben beschriebenen Steuermodul 12, bei welchem sowohl der CAN-Bus 18 als auch der Dual-Ported RAM 19 abschnittsweise zum Übertragen von Daten verwendet werden.

Bei der oben beschriebenen Steuereinrichtung wird dieses Problem dadurch gelöst, dass auf jedem Mikrokontroller 28 eine Kommunikationstask vorhanden ist, die die Kommunikation zu den weiteren Mikrokontrollern steuert. Dieses Problem wird somit softwaretechnisch auf Taskebene gelöst.

Hierzu wird jedem Mikrokontroller 28 des Datennetzwerkes 13 eine bestimmte Identifikation (ID) zugeordnet. Bei dem Drucker 1 ist zum Beispiel die Identifikation aus folgenden Elementen "Bereich", "Einheit", "Baugruppe" und "Mikrokontroller" zusammengesetzt, wobei folgende Nomenklatur verwendet wird:

| | | |
|---|---|---|
| Bereich: | PI | = Papiereingabe (Paper Input) |
| | PU | = Druckeinheit (Print Unit) |
| | PO | = Papierausgabe (Paper Output) |
| | | |
| Einheit: | _ | = Taktmaster |
| | X_ | = x ist die Nummer eines der weiteren |
| | | Steuermodule |
| | | |
| Baugruppe: | VW | = Verwaltungsbaugruppe |
| | RT | = Echtzeitbaugruppe (Realtime-Baugruppe) |
| | SM_PCBx = | Steuerungsbaugruppe mit der Nummer x |
| | | |
| Mikrokontroller: | | Der Mikrokontroller muss nur angegeben werden, wenn eine Baugruppe mehr als einen Mikrokontroller hat. |
| | | |
| | _BN | = Bootmaster |
| | _SATx | = Satellit Nr. x |

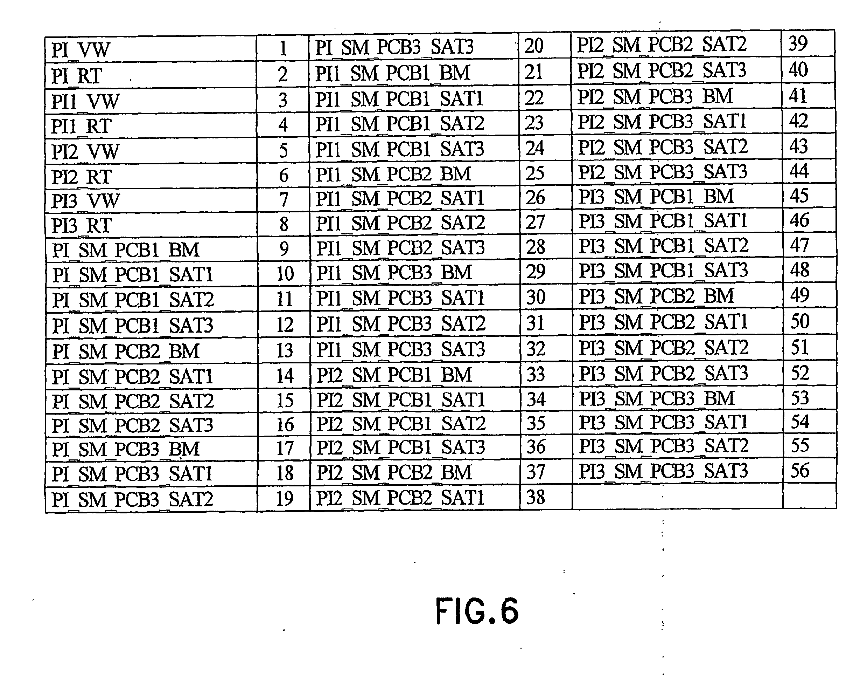

In Figur 6 ist eine Tabelle mit den Identifikationen der Mikrokontroller von vier Steuermodulen 12 für eine Papiereingabe angegeben, wobei ein Steuermodul die Aufgabe des Taktmasters übernimmt und die drei weitere Steuermodule 12 ihre Zähler nach dem Taktsignal des Taktmasters synchronisieren.

Diese vier Steuermodule 12 umfassen insgesamt 56 Mikrokontroller, die mittels der obigen Nomenklatur eindeutig identifiziert werden können.

In jeder Kommunikationstask ist eine Routing-Tabelle enthalten, mit Hilfe der die Übermittlung der Datennachrichten über das Netzwerk ausgeführt wird.

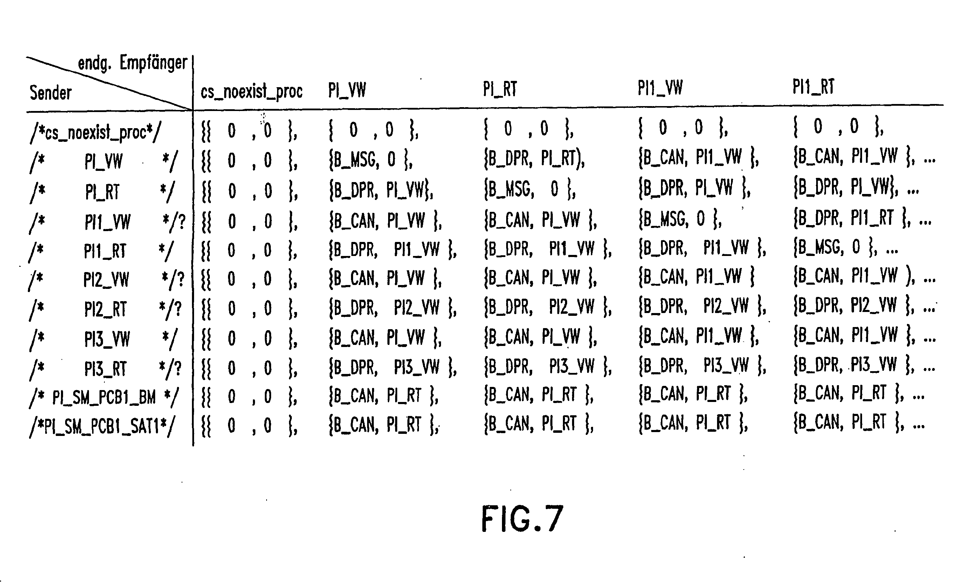

Figur 7 zeigt einen Ausschnitt dieser Routing-Tabelle für die Mikrokontroller der Papiereingabe gemäß der Tabelle aus Figur 6. Diese Tabelle ist eine 57x57-Matrix, wobei die Spalten jeweils einem Empfänger-Mikrokontroller und die Reihen jeweils einem senden Mikrokontroller zugeordnet sind. Die Identifikationen der sendenden Mikrokontroller sind deshalb in der linken Spalte angegeben, die Identifikationen der empfangenden Mikrokontroller sind in der obersten Reihe angegeben. Die empfangenden Mikrokontroller sind hierbei die Mikrokontroller, die endgültig die entsprechende Nachricht empfangen sollen. Zudem ist der virtuelle Mikrokontrollername "cs _noexist proc" aufgeführt, dem alle fehlerhaften Identifikationen bei der Nachrichtenübertragung zugeordnet werden. In der Matrix selbst sind an jeder Stelle ein Wertepaar in geschweiften Klammern angegeben. Der erste Wert jeder Klammer enthält einen Ausdruck für den zur Übertragung zu verwendenden Typs des Übertragungssystems, wie zum Beispiel B_CAN für den CAN-Bus bzw. B_DPR für den Dual-Ported RAM. Der zweite Wert dieses Wertepaares enthält die Identifikation des jeweils benachbarten. Mikrokontrollers, an den die Nachricht weitergeleitet werden muss, damit sie an den Empfänger-Mikrokontroller gelangen kann.

Erhält zum Beispiel die Kommunikationstask des Mikrokontrollers PE_SM_PCB1_BN, d.h. der Bootmaster der ersten Steuerbaugruppe 17 des Taktmasters, den Befehl, eine Nachricht an die Verwaltungsbaugruppe 15 des Taktmasters zu senden, so erkennt die Kommunikationstask anhand der Routing-Tabelle, dass die Nachricht über den CAN-Bus (B_CAN) an die Echtzeitbaugruppe 16 (PI_RT) des Taktmasters weiterzuleiten ist. An der Echtzeitbaugruppe 16 liest der entsprechende Mikrokontroller den endgültigen Empfänger der Datennachricht (PI_VW) aus und erkennt anhand der Routing-Tabelle, dass die Datennachricht über den Dual-Ported RAM (B_DPR) an die Verwaltungsbaugruppe (PI-VW) des Taktmasters weiterzuleiten ist. Die Kommunikationstask der einzelnen Baugruppen greifen zum Übertragen der Nachrichten auf die Befehle des jeweiligen Betriebssystems zurück, in welchem Befehle zur Weiterleitung der Informationen mittels der entsprechenden Übertragungssysteme enthalten sind. Falls im Betriebssystem kein entsprechenden Befehle vorhanden sind, müssen entsprechende Treiber eingesetzt werden.

Beim Empfang einer Nachricht durch die Kommunikationstask wird somit zunächst geprüft, welcher Mikrokontroller der endgültige Empfänger der Nachricht ist und dann mittels der Routing-Tabelle ermittelt, an welchen benachbarten Mikrokontroller die Nachricht über welches Kommunikationssystem weitergeleitet werden muss. Anhand dieser Daten wird dann die Nachricht an den geeigneten benachbarten Mikrokontroller weitergeleitet. Dies wird mit der Nachricht so oft wiederholt ausgeführt, bis die Nachricht beim endgültigen Empfänger angelangt ist.

Durch das Vorsehen der Routing-Tabelle wird somit auf Taskehene eine Lösung geschaffen, dass Nachrichten über Datennetzwerke übermittelt werden, die abschnittsweise aus unterschiedlichen Übertragungssystemen ausgebildet sind. In den Betriebssystemen der einzelnen Mikrokontroller müssen lediglich die Kommunikationsbefehle zum Kommunizieren mit den benachbarten Mikrokontroller implementiert sein, was üblicherweise der Fall ist.

Grundsätzlich ist es nicht notwendig, dass in allen Kommunikationstask die vollständige Routing-Tabelle enthalten ist. Jede Task sollte zumindest die Reihe der Tabelle enthalten, deren Sender-Mikrokontroller der jeweilige Mikrokontroller der Kommunikationstask ist.

Das oben beschriebene Verfahren zum Übertragen von Datennachrichten in einem Datennetzwerk mittels Kommunikationstasks und Routing-Tabellen kann auf einen beliebigen Datenbus angewandt werden und ist auch unabhängig von dem oben beschriebenen System mit Taktleitung ausführbar. In Kombination mit der Taktleitung erlaubt es jedoch die Verwendung eines inhomogenen Datennetzwerkes als Steuereinrichtung, wobei zugleich die Echtzeitfähigkeit der gesamten Steuereinrichtung gewährleistet wird.

Die Erfindung kann folgendermaßen kurz zusammengefasst werden:

Die Erfindung betrifft ein Verfahren zum Synchronisieren von Aktionen, die über ein lokales, mehrere Mikrokontroller aufweisendes Datennetzwerk gesteuert werden, und ein Verfahren zum Senden von Nachrichten über ein solches Datennetzwerk.

Die einzelnen Mikrokontroller des Datennetzwerkes weisen Zähler auf, die über ein gemeinsames Taktsignal synchronisiert sind. Anhand der Zählerwerte können alle einzelne Mikrokontroller zu einem exakt bestimmten Zeitpunkt ausgeführt werden.

Das erfindungsgemäße Verfahren zum Übertragen von Nachrichten über das Datennetzwerk umfasst eine Kommunikationstask, die auf einem jeden Mikrokontroller implementiert ist und die anhand einer Routing-Tabelle feststellt, mit welchem Übertragungssystem sie die Nachricht an welchen benachbarten Mikrokontroller weiterleiten muss. Die Kommunikationstask kann durch weitere Tasks entlastet werden, die z.B. die Vorverarbeitung der Nachrichten übernehmen.

Die Kombination der beiden Verfahren erlaubt die Verwendung eines inhomogenen Datennetzwerkes zur Ausführung von Steueraufgaben in Echtzeit.

### Bezugszeichenliste

- 1: Einzelblattdrucker
- 2: Papiereingabeschacht
- 3: Transportweg
- 4: Druckwerk
- 5: Ausgabeschacht
- 6: Walzenpaar
- 7: Druckwalze
- 8: Farbauftragwalze
- 9: Vorratsbehälter
- 10: Zufuhrleitung
- 11: Ventil
- 12: Steuermodul
- 13: Datennetzwerk
- 14: zentrale Steuereinrichtung
- 15: Verwaltungsbaugruppe
- 16: Echtzeitbaugruppe
- 17: Steuerbaugruppe
- 18: CAN-Datenbus
- 19: Dual-Ported RAM
- 20: Speicherbereich
- 21: Speicherbereich
- 22: Mikrokontrollermodul
- 23: Mikrokontrollermodul
- 24: Datenbus
- 25: Taktleitung
- 26: Verstärker
- 27: Taktgeber
- 28: Mikrokontroller
- 29: Zähler

## Patentansprüche

1. Verfahren zur Steuerung einer Vorrichtung (1), bei dem Nachrichten über ein Datennetzwerk gesandt werden, wobei mehrere Steuermodule (12) der Vorrichtung (1), die Mikrokontroller (28) aufweisen, mittels des Datennetzwerkes (13) miteinander verbunden sind, und zumindest zwischen zwei der Mikrokontroller (28) als Kommunikationssystem ein Dual-Ported RAM (19) angeordnet ist und
- auf jedem der Mikrokontroller (28) ein Betriebssystem ausgeführt wird,
**dadurch gekennzeichnet, dass**
- auf jedem der Mikrokontroller (28) eine Kommunikationstask ausgeführt wird, die eine Routing-Tabelle enthält, in der zum Senden einer Nachricht von einem Mikrokontroller (28), an dem die Kommunikationstask ausgeführt wird, dem Sende-Mikrokontroller, zu einem beliebigen weiteren Mikrokontroller (28), dem Empfänger-Mikrokontroller, für einen jeden Empfänger-Mikrokontroller ein zum Übertragen einer Nachricht geeigneter, zum Sende-Mikrokontroller benachbarter Mikrokontroller und der Typ des Kommunikationssystems zwischen dem Sende-Mikrokontroller und dem entsprechenden benachbarten Mikrokontroller gespeichert sind, wobei
- a) beim Senden der Nachricht an einen bestimmten Empfänger-Mikrokontroller aus der Routing-Tabelle der zum Sende-Mikrokontroller geeignete benachbarte Mikrokontroller und das entsprechende Kommunikationssystem ausgelesen werden, und
- b) die Nachricht an diesen benachbarten Mikrokontroller übertragen wird,
- wobei die Schritte a) und b) am jeweiligen benachbarten Mikrokontroller wiederholt werden, bis die Nachricht zum Empfänger-Mikrokontroller übertragen worden ist, wobei
- ein Datennetzwerk (13) verwendet wird, welches ein inhomogenes Datennetzwerk (13) verwendet, bei dem Daten abschnittsweise mit unterschiedlichen Protokollen übertragen werden und wobei
- über das Datennetzwerk (13) Aktionen der Steuermodule (12) synchronisiert gesteuert werden, indem jeder Mikrokontroller (28) einen Zähler (27) mit einem Zählregister aufweist und alle Zähler (27) zumindest beim Hochfahren des Datennetzwerkes (13) synchronisiert werden, indem sie auf einen vorbestimmten Initialwert gesetzt werden, und nach dem Initialisieren mittels einer Taktleitung (25) ein einheitliches Taktsignal an alle Mikrokontroller (28) gesandt wird, wobei die Zähler (27) der Mikrokontroller (28) die Takte des Taktsignals zählen, und Aktionen von Steuerbefehlen ausgelöst werden, die über das Datennetzwerk (13) übertragen werden und die ein Zeitsignal in Form eines Zählerwertes enthalten, so dass der Steuerbefehl beim Erreichen dieses Zählerwertes durch den entsprechenden Mikrokontroller (28) ausgeführt wird, wobei
- die Taktleitung (25) zu allen Mikrokontrollern (28) verzweigt und zusätzlich zum Datennetzwerk (13) vorgesehen ist.

2. Verfahren nach Anspruch 1,
**dadurch gekennzeichnet,**
**dass** der Dual-Ported RAM (19) in zwei Speicherbereiche (20, 21) unterteilt ist, die als Ringpuffer zur Kommunikation zwischen den benachbarten Mikrokontrollern (28) verwendet werden.

3. Verfahren nach Anspruch 1 oder 2,
**dadurch gekennzeichnet,**
**dass** eines der Protokolle ein CAN Controller Error Network Protokoll ist.

4. Verfahren nach einem der Ansprüche 1 bis 3,
**dadurch gekennzeichnet,**
**dass** die Synchronisierung der Aktionen der Steuermodule (12) in Echtzeit erfolgt.

5. Verfahren nach einem der Ansprüche 1 bis 4,
**dadurch gekennzeichnet,**
**dass** alle Mikrokontroller (28) des Datennetzwerkes (13) in regelmäßigen Intervallen synchronisiert werden, indem das Taktsignal ausgesetzt wird,
alle Zähler (27) dem Mikrokontroller (28) einheitlich auf einen vorbestimmten Wert gesetzt werden, und
das Taktsignal wieder an alle Mikrokontroller (28) gesandt wird.

6. Verfahren nach Anspruch 5, **dadurch gekennzeichnet, dass** als Datennetzwerk ein seriell die Daten übertragendes Netzwerk, das auf einer Zwei-Draht-Leitung basiert, verwendet wird.

7. Verfahren nach einem der Ansprüche 1 bis 6,
**dadurch gekennzeichnet, dass** ein Taktsignal mit einer Taktrate von 50 - 200 kHz erzeugt wird.

8. Verfahren nach einem der Ansprüche 1 bis 7,
**dadurch gekennzeichnet, dass** zeitlich kritische Informationen, wie zum Beispiel Sensordaten, Fehlermeldungen oder Tracedaten, zum Zeitpunkt ihrer Entstehung mit dem aktuellen Wert des Zählregisters eines der Zähler (27) versehen werden.

9. Steuereinrichtung, die eine zentrale Steuereinrichtung (14) ein Datennetzwerk (13) und mehrer über das Datennetzwerk (13) verbundene Mikrokontrollermodule (12, 22, 23) aufweist und die zum Ausführen eines Verfahrens nach einem oder mehreren der Ansprüche 1 bis 8 ausgebildet ist.

10. Steuereinrichtung nach Anspruch 9, **dadurch gekennzeichnet, dass** zumindest eines der Mikrokontrollermodule als Steuermodul (12) mit einer Verwaltungsbaugruppe (15) und mit einer Echtzeitbaugruppe (16) ausgebildet ist, die über einen Dual-Ported RAM (19) verbunden sind, und zumindest eine Steuerbaugruppe (17) aufweist, die mehrere Mikrokontroller (28) enthält, wobei die Mikrokontroller (28) der Steuerbaugruppe (17) über einen CAN-Datenbus (18) und die Steuerbaugruppe (17) mit der Echtzeitbaugruppe (16) über einen CAN-Datenbus (18) verbunden sind.

11. Vorrichtung zum Drucken und/oder Kopieren mit einer Steuereinrichtung nach einem der Ansprüche 9 oder 10.

## Claims

1. A method for controlling a device (1), in which messages are sent over a data network, wherein a plurality of control modules (12) of the device (1) which comprise microcontrollers (28) are connected with one another by means of the data network (13), and a dual-ported RAM (19) is arranged at least between two of the microcontrollers (28) as a communication system, and
- an operating system is executed on each microcontroller (28), **characterized in that**
- a communication task is executed on each microcontroller (28), which communication task contains a routing table in which, for each receiver microcontroller, a microcontroller suitable for the transfer of a message and adjacent to the transmitting microcontroller and the type of the communication system between the transmitting microcontroller and the corresponding adjacent microcontroller are stored for the transmission of a message from a microcontroller (28) at which the communication task is executed, the transmitting microcontroller, to an arbitrary further microcontroller (28), the receiver microcontroller, wherein
- a) upon transmission of the message to a specific receiver microcontroller, the suitable microcontroller adjacent to the transmitting microcontroller and the corresponding communication system are read from the routing table
and
- b) the message is transmitted to this adjacent microcontroller,
- wherein the steps a) and b) are repeated at the respective adjacent microcontroller until the message has been transmitted to the receiver microcontroller, wherein
- a data network (13) is used which uses an inhomogeneous data network (13) in which data are transferred with different protocols per segment, and
wherein
- via the data network (13) actions of the control modules (12) are controlled in sync, **in that** each microcontroller (28) comprises a counter (27) with a count register and all counters (27) are synchronized at least upon powering up the data network (13), **in that** they are set to a predetermined initial value, and after the initialization a uniform clock signal is sent to all microcontrollers (28) by means of a clock line (25), wherein the counters (27) of the microcontrollers (28) count the clock pulses of the clock signal, and actions are initiated by control commands that are transferred over the data network (13) and that contain a time signal in the form of a counter value, such that the control command is executed upon the corresponding microcontroller (28) reaching this counter value, wherein
- the clock line (25) is provided so as to be branched to all microcontrollers (28) and is provided in addition to the data network (13).

2. Method according to claim 1,
**characterized in that**
the dual-ported RAM (19) is divided into two storage ranges (20, 21) which are used as a ring buffer for communication between the adjacent microcontrollers (28).

3. Method according to claim 1 or 2,
**characterized in that**
one of the protocols is a CAN controller error network protocol.

4. Method according to one of the claims 1 to 3,
**characterized in that**
the synchronization of the actions of the control modules (12) takes place in real-time.

5. Method according to one of the claims 1 to 4,
**characterized in that**
all microcontrollers (28) of the data network (13) are synchronized in regular intervals **in that** the clock signal is interrupted,
all counters (27) of the microcontroller (28) are uniformly set to a predetermined value, and
the clock signal is again sent to all microcontrollers (28).

6. The microcontroller according to claim 5, **characterized in that** a network serially transferring the data, which is based on a two-wire line, is used as a data network.

7. The method according to one of the claims 1 to 6,
**characterized in that** a clock signal is generated with a clock rate of 50 - 200 kHz.

8. The method according to one of the claims 1 to 7,
**characterized in that** temporally-critical information such as, for example, sensor data, error messages or trace data are provided with the current value of the count register of one of the counters (27) at the point in time of their creation.

9. A control device that comprises a central control device (14), a data network (13) and a plurality of microcontroller modules (12, 22, 23) connected over the data network (13) and that is designed to execute a method according to one or more of the claims 1 to 8.

10. The control device according to claim 9, **characterized in that** at least one of the microcontroller modules is designed as a control module (12) with an administration assembly (15) and with a real-time assembly (16) that are connected via a dual-ported RAM (19), and that comprises at least one control assembly (17) that comprises a plurality of microcontrollers (28), wherein the microcontrollers (28) of the control assembly (17) are connected via a CAN data bus (18) and the control assembly (17) is connected with the real-time assembly (16) via a CAN data bus (18).

11. Device for printing and/or copying with a control device according to one of the claims 9 or 10.

## Revendications

1. Procédé de commande d'un dispositif (1), dans lequel des informations sont envoyées sur un réseau de données, plusieurs modules de commande (12) du dispositif (1), qui comportent des microcontrôleurs (28), étant reliés entre eux par le réseau de données (13), et une mémoire Dual-Ported RAM (19) servant de système de communication étant disposée entre au moins deux des microcontrôleurs (28), et
- un système d'exploitation étant exécuté sur chacun des microcontrôleurs (28),
**caractérisé en ce que**
- une tâche de communication est exécutée sur chacun des microcontrôleurs (28), laquelle contient une table de routage dans laquelle, pour envoyer un message d'un microcontrôleur (28), ou microcontrôleur d'émission, sur lequel est exécuté la tâche de communication, vers un autre microcontrôleur quelconque (28), ou microcontrôleur de réception, et on mémorise, pour chaque microcontrôleur de réception, un microcontrôleur voisin du microcontrôleur d'émission et approprié à la transmission d'une information et le type du système de communication entre le microcontrôleur d'émission et le microcontrôleur voisin correspondant, procédé dans lequel
- a) lors de l'envoi de l'information à un microcontrôleur de réception déterminé, le système de communication correspondant et le microcontrôleur voisin approprié au microcontrôleur d'émission sont lus dans la table de routage, et
- b) l'information est transmise à ce microcontrôleur voisin,
- les étapes a) et b) étant répétées au niveau du microcontrôleur voisin respectif jusqu'à ce que l'information soit transmise au microcontrôleur de réception,
- un réseau de données (13) étant utilisé, lequel utilise un réseau de données hétérogène (13) dans lequel des données sont transmises par lots avec différents protocoles et
- des actions des modules de commande (12) étant commandées de façon synchronisée sur le réseau de données (13) en raison du fait que chaque microcontrôleur (28) comporte un compteur (27) possédant un registre de comptage, et que tous les compteurs (27) sont synchronisés au moins lors du démarrage du réseau de données (13) **en ce qu'**ils sont initialisés à une valeur initiale prédéterminée, et **en ce que**, après l'initialisation, un signal d'horloge unique est envoyé à tous les microcontrôleurs (28) au moyen d'une ligne d'horloge (25), les compteurs (27) des microcontrôleurs (28) comptant les impulsions du signal d'horloge, et des actions sont déclenchées par des instructions de commande transmises sur le réseau de données (13) et contenant un signal temporel se présentant sous la forme d'une valeur de compteur, de façon que l'instruction de commande soit exécutée par le microcontrôleur correspondant (28) lorsque cette valeur de compteur est atteinte,
- la ligne d'horloge (25) étant raccordée à tous les microcontrôleurs (28) de façon ramifiée et en plus au réseau de données (13).

2. Procédé selon la revendication 1, **caractérisé en ce que** la mémoire Dual-Ported RAM (19) est divisée en deux zones de mémoire (20, 21) qui sont utilisées comme mémoires tampons annulaires pour la communication entre les microcontrôleurs voisins (28).

3. Procédé selon la revendication 1 ou 2, **caractérisé en ce que** l'un des protocoles est un protocole Controller Error Network CAN.

4. Procédé selon l'une des revendications 1 à 3, **caractérisé en ce que** la synchronisation des actions des modules de commande (12) se fait en temps réel.

5. Procédé selon l'une des revendications 1 à 4, **caractérisé en ce que** tous les microcontrôleurs (28) du réseau de données (13) sont synchronisés à intervalles réguliers en interrompant le signal d'horloge, en mettant tous les compteurs (27) des microcontrôleurs (28) de façon unique à une valeur prédéterminée, et en envoyant de nouveau le signal d'horloge à tous les microcontrôleurs (28).

6. Procédé selon la revendication 5, **caractérisé en ce que** l'on utilise comme réseau de données un réseau qui transmet les données en série, et qui fonctionne sur une ligne bifilaire.

7. Procédé selon l'une des revendications 1 à 6, **caractérisé en ce qu'**il est généré un signal d'horloge d'une fréquence de 50 à 200 kHz.

8. Procédé selon l'une des revendications 1 à 7, **caractérisé en ce que** des informations temporellement critiques, telles que par exemple des données de capteurs, des messages d'erreur ou des données d'analyse, sont dotées au moment de leur génération de la valeur actuelle du registre de comptage de l'un des compteurs (27).

9. Dispositif de commande, qui comporte un dispositif de commande centrale (14), un réseau de données (13) et plusieurs modules de microcontrôleurs (12, 22, 23) reliés par le réseau de données (13), et qui est conformé pour mettre en ouvre un procédé selon l'une ou plusieurs des revendications 1 à 8.

10. Dispositif de commande selon la revendication 9, **caractérisé en ce que** l'un au moins des modules de microcontrôleur est conformé en module de commande (12) comportant un élément de gestion (15) et un élément fonctionnant en temps réel (16) qui sont reliés entre eux par une mémoire Dual-Ported RAM (19), et au moins un élément de commande (17) qui contient plusieurs microcontrôleurs (28), les microcontrôleurs (28) étant reliés à l'élément de commande (17) par un bus de données CAN (18), et l'élément de commande (17) étant relié à l'élément fonctionnant en temps réel (16) par un bus de données CAN (18).

11. Dispositif d'impression et/ou de copie, comportant un dispositif de commande selon l'une des revendications 9 ou 10.
